(19) Europäisches Patentamt / European Patent Office / Office européen des brevets

(11) **EP 1 815 632 B1**

(12) **FASCICULE DE BREVET EUROPEEN**

(45) Date de publication et mention
de la délivrance du brevet:
**18.04.2012 Bulletin 2012/16**

(21) Numéro de dépôt: **05807995.5**

(22) Date de dépôt: **10.11.2005**

(51) Int Cl.:
*H04L 1/20* (2006.01)          *H04B 17/00* (2006.01)
*H04B 7/185* (2006.01)

(86) Numéro de dépôt international:
**PCT/EP2005/055889**

(87) Numéro de publication internationale:
**WO 2006/051095 (18.05.2006 Gazette 2006/20)**

(54) **PROCEDE POUR PLANIFIER ET/OU DIMENSIONNER DES TELECOMMUNICATIONS PAR SATELLITE GRACE A UN INDICATEUR DE QUALITE**

VERFAHREN ZUR PLANUNG UND/ODER DIMENSIONIERUNG DER SATELLITENTELEKOMMUNIKATION DURCH EINEN QUALITÄTSINDIKATOR

METHOD FOR PLANNING AND/OR DIMENSIONING SATELLITE TELECOMMUNICATIONS THROUGH A QUALITY INDICATOR

(84) Etats contractants désignés:
**FR GB IT**

(30) Priorité: **10.11.2004 FR 0411984**

(43) Date de publication de la demande:
**08.08.2007 Bulletin 2007/32**

(73) Titulaire: **THALES**
**92200 Neuilly sur Seine (FR)**

(72) Inventeur: **BRUAS, Patrick**
**F-93190 LIVRY GARGAN (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 4 119 964**

• **G.MARAL &M.BOUSQUET: "Satellite Communications Systems" 1997, WILEY , CHICHESTER (GB) , XP002339406 page 60 - page 61 page 64 - page 65**

**Description**

L'invention concerne un outil d'aide à la planification des liaisons de télécommunications par satellite. Il sert aussi à dimensionner ces liaisons.

Les télécommunications par satellite permettent d'écouler du trafic à haut débit entre deux abonnés quelconques situés dans la couverture du système antennaire bord, au travers d'un répéteur transparent, sous réserve que le bilan de liaison le permette.

Un algorithme de calcul de bilan de liaison Satcom calcule généralement la puissance isotrope rayonnée équivalente sol ou PIRE$_{sol}$ nécessaire d'une station terrestre A, pour qu'une station terrestre B donnée reçoive un rapport signal sur densité de bruit total C/No qui est requis par la liaison, à un débit utilisateur D et un taux d'erreur binaire TEB pour un environnement donné de propagation et d'interférences, via une charge utile (segment spatial) connue et avec une certaine marge système M.

Un algorithme de calcul de bilan de liaison Satcom calcule en général l'une des grandeurs suivantes :

- soit la PIRE sol en dBW nécessaire pour un couple (D, Eb/No) donné, avec Eb l'énergie moyenne reçue par bit du trafic utilisateur,
- soit le Débit D maximum pour un couple (PIRE sol, Eb/No) donné,
- soit le Eb/No nécessaire pour un couple (PIRE sol, D) donné.

Le cahier des charges du modem du segment sol permet de calculer le ratio puissance moyenne reçue sur densité de bruit total C/No requis par le démodulateur. Ce ratio est donné par la formule suivante (sous forme logarithmique) :

$$\left(\frac{C}{No}\right)_{req} = \left(\frac{Eb}{No}\right) + 10\log_{10}D + M \qquad [E1]$$

La formule canonique de bilan de liaison satellite sous forme linéaire pour un répéteur transparent (i.e. non-régénératif) est :

$$\left(\frac{C}{No}\right)_{total}^{-1} = \sum_{k=1}^{n}\left(\frac{C}{No}\right)_{k}^{-1} = (C/No)^{-1}{}_{th\_uplink} + (C/No)^{-1}{}_{th\_downlink}$$

$$+ \text{ autres termes (ex : interférences, intermodulation)} \qquad [E2]$$

Le terme de gauche est calculé à partir du résultat de calcul de chacun des termes de perturbation { (C/No)$^{-1}$ d'indice i } encore appelés postes qui interviennent dans cette somme d'inverses. Le nombre minimum de postes est n=2 avec les termes de bruit thermique montant *(th\_uplink)* et de bruit thermique descendant *(th\_downlink)*.

La condition de succès du bilan de liaison est la suivante :

$$\left(\frac{C}{No}\right)_{total} = \left(\frac{C}{No}\right)_{req} \qquad [E3]$$

Selon les méthodes de l'art antérieur, le calcul de [E2] est mené en échelle linéaire après conversion de chacun des postes de l'échelle logarithmique vers l'échelle linéaire.

Certains algorithmes de calcul de l'état de l'art sont basés sur un calcul à rebours : on part d'un point de C/No reçu puis on remonte à la PIRE satellite puis à la PIRE sol via le gain opérationnel. Ensuite une boucle de convergence réitère le calcul jusqu'à ce que le C/No total soit égal au C/No requis.

Le calcul de bilan de liaison sert aussi à dimensionner les stations (en amplificateurs de puissance et système antennaire sol) pour une charge utile donnée et un débit de trafic donné.

L'invention repose sur une nouvelle approche d'outil et de dispositif de calcul de bilan de liaison et/ou de dimensionnement d'une liaison qui consiste notamment à déterminer un indicateur de qualité pertinent désigné dans la suite de la description par QaF. Ce « chiffre de qualité totale » est un indicateur de qualité qui correspond au sigle anglo-saxon QaF signifiant « Quality aggregate Figure ».

Cet indicateur de qualité correspond à un coefficient de proportionnalité, exprimé en dBHz/W entre le rapport signal sur densité de bruit totale C/No requis pour la liaison et la PIREsol nécessaire de la porteuse de cette liaison. Il y a donc un échange entre la PIREsol et le rapport signal sur densité de bruit total C/No requis (en dBHz). Cet échange est exprimé par la relation [E4] mentionnée ci-après.

L'invention concerne un procédé pour planifier et/ou dimensionner des liaisons entre plusieurs stations ou postes, caractérisé en ce qu'il comporte au moins les étapes suivantes :

a) établir, par liaison existante, en échelle logarithmique, une relation entre la puissance rayonnée équivalente sol, PIREsol, le rapport signal sur densité de bruit requis (C/No)req pour une liaison, et un indicateur de qualité QaF,

$$PIRE_{sol} = \left( \frac{C}{N_0} \right)_{req} - QaF$$

où $C/N_0$ correspond au rapport signal sur bruit de densité total.

b) déterminer l'indicateur de qualité QaF à partir de la contribution des postes de perturbation de première espèce qui sont linéaires en PIREsol et des postes de seconde espèce qui sont non linéaires en PIREsol en utilisant :

$$\left( \frac{C}{No} \right)_{total}^{-1} = \sum_{i=1}^{p} \left( \frac{C}{No} \right)_{i}^{-1} + \sum_{j=p+1}^{n} \left( \frac{C}{No} \right)_{j}^{-1}$$

où p correspond aux termes de première espèce linéaires en PIREsol et « n-p » aux termes de seconde espèce qui ne sont pas linéaires en PIREsol, le coefficient de proportionalité entre le poste $C/N_0$ d'indice i et la PIREsol est noté R d'indice i avec l'équation en échelle linéaire suivante :

$(C/N_0)i = Ri*PIREsol$ où i est l'indice des termes de première espèce,

c) déterminer la PIREsol à partir de l'indicateur de qualité QaF déterminé à l'étape b).

L'invention concerne aussi un centre de gestion centralisé dit CGR caractérisé en ce qu'il comprend des moyens adaptés à mettre en oeuvre les étapes du procédé présenté ci-dessus.

L'invention concerne aussi un système de télécommunications sans fil caractérisé en ce qu'il comprend un centre de gestion centralisé précité, plusieurs stations, chaque station comprenant un centre de gestion locale adapté à recevoir la liste des valeurs de puissance rayonnées équivalente sol, PIREsol, liaison par liaison.

Le procédé selon l'invention offre notamment une aide à la planification et au dimensionnement des liaisons de télécommunications par satellite. Il offre notamment les avantages suivants :

- L'indicateur de qualité QaF est indépendant du modem et de la PIRE sol.
- Cet indicateur établit une relation d'échange notamment entre les grandeurs suivantes : le débit D, le ratio Eb/No, la marge système, la surface d'antenne réception et la PIREsol pour une charge utile donnée (caractérisée par sa couverture, son facteur de mérite (G/T)sat, sa densité de flux saturant DFS et la PIRE à saturation du répéteur) et pour un environnement de propagation et d'interférences donné. Cette relation s'avère utile en architecture des réseaux Satcom.

D'autres caractéristiques et avantages de la présente invention apparaîtront mieux à la lecture de la description qui suit, d'un exemple de réalisation donné à titre illustratif et nullement limitatif annexé, des figures qui représentent :

- La figure 1 un exemple d'architecture avec plusieurs postes impliqués dans le bilan de liaison Satcom,
- La figure 2 un synoptique fonctionnel du procédé selon l'invention,
- La figure 3 la structure de l'opérateur « papillon » élémentaire utilisé dans le procédé,
- La figure 4 l'architecture de l'algorithme de calcul de la PIREsol avec termes de première espèce seulement,
- La figure 5 un exemple de calcul de PIRE sol avec termes de première et de seconde espèce,
- La figure 6 l'architecture de l'opérateur « papillon » pour les cas où l'on a des termes de première espèce et de seconde espèce,

- La figure 7 différentes courbes d'indicateur de qualité en fonction des surfaces d'antenne de réception et des couvertures du satellite.

Afin de mieux faire comprendre l'invention, la description qui suit est donnée dans le cadre d'une liaison satcom.

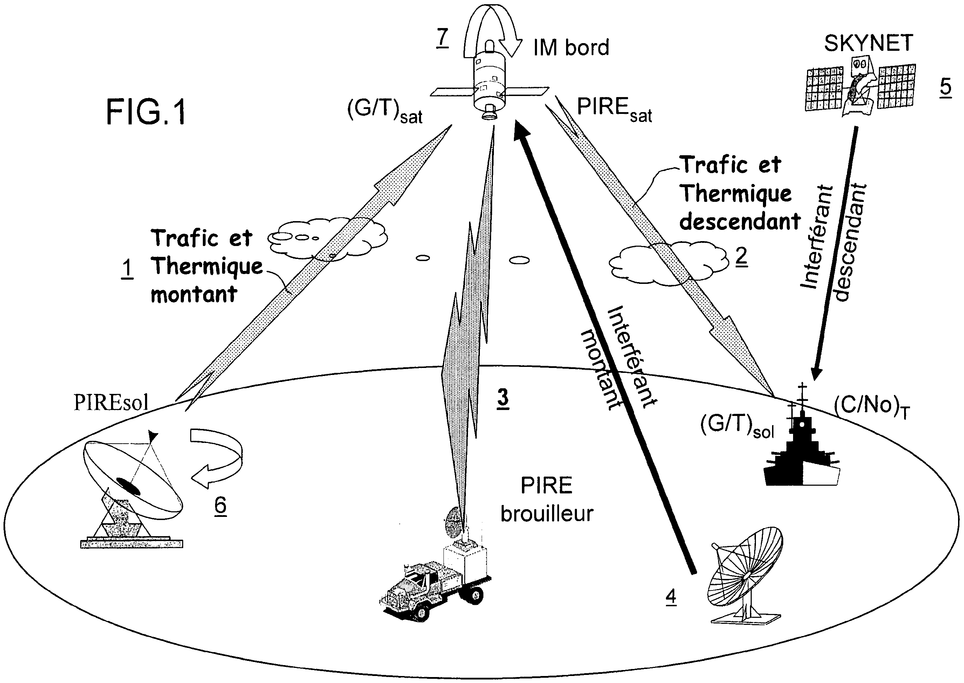

La figure 1 donne un exemple de liaisons point-à-point qui illustre la présence de sept postes de perturbation dans le bilan de liaison :

- Poste 1 : $(C/No)_1$ = Thermique montant

- Poste 2 : $(C/No)_2$ = Thermique descendant

- Poste 3 : $(C/No)_3$= Brouilleur montant

- Poste 4 : $(C/No)_4$ = Interférence du système adjacent montante (exemple : Terminal Skynet)

- Poste 5 : $(C/No)_5$ = Interférence du système adjacent descendante (exemple : Satellite Skynet)

- Poste 6 : $(C/No)_6$= Intermodulation segment sol (IM sol)

- Poste 7 : $(C/No)_7$= Intermodulation segment spatial (IM bord)

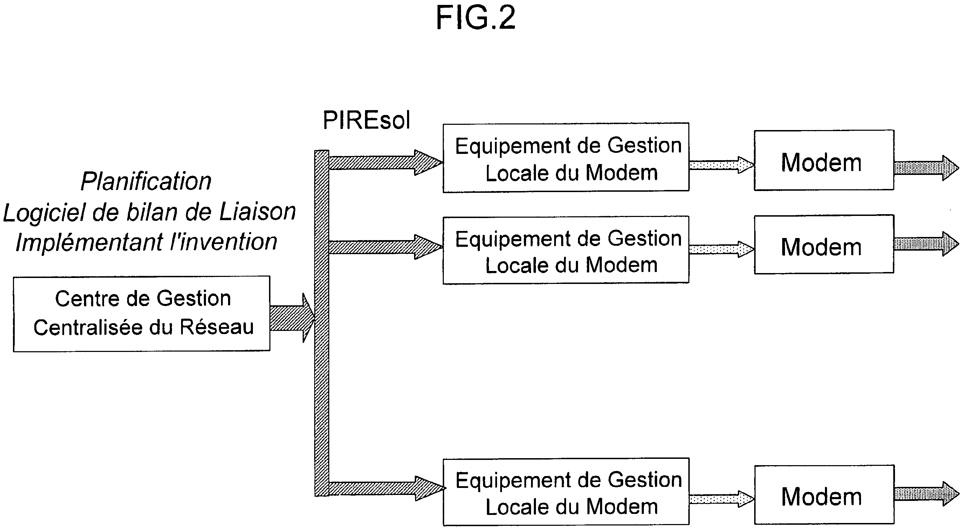

La figure 2 représente un synoptique fonctionnel de la mise en oeuvre du procédé selon l'invention.
L'outil de planification et d'aide au dimensionnement des liaisons est par exemple implémenté dans un Centre de Gestion centralisée 1, du Réseau ou CGR (i.e. l'ensemble des unités de communication (UC) qui sont des extrémités de liaison point-à-point via un même répéteur, chaque unité de communication UC appartenant physiquement à une station Satcom). Le centre de gestion centralisé CGR fournit la liste des valeurs des PIREsol, liaison par liaison, qui seront distribuées à chaque centre de gestion locale qui est rattaché à une station. Ensuite, connaissant le gain de chaîne émission entre la sortie FI (fréquence intermédiaire) du modem de la station et la sortie antenne de la station, le centre de gestion locale va convertir la PIREsol en puissance FI émission qui va servir à configurer le modem correspondant à la liaison. Le centre de gestion centralisée du réseau peut éventuellement fournir à l'opérateur une aide sous forme graphique et tabulée en lui présentant la sensibilité de l'indicateur de qualité aux paramètres suivants : surface d'antenne de réception, couverture et/ou gain opérationnel du répéteur, niveau d'interférence, angle d'élévation des stations, marges d'atténuations etc.
Le centre de gestion centralisée comprend un processeur permettant d'exécuter les différentes étapes du procédé selon l'invention, et les centres de gestion locale sont équipés eux aussi de processeurs programmés.
La planification Satcom consiste notamment à déterminer la PIREsol de chaque liaison et la consommation des ressources pour un déploiement donné.
En résumé, le procédé d'aide à la planification des télécommunications par satellite comporte par exemple les étapes suivantes:

1 - déterminer la contribution des postes linéaires en PIREsol,
2 - déterminer la contribution des postes éventuels qui sont non linéaires en PIREsol,
3 - déterminer l'indicateur de qualité QaF à partir des résultats de 1 et 2,
4 - déterminer la PIREsol en tenant compte des résultats de 3 et du (C/No)requis.

L'indicateur de qualité QaF représente en pratique le nombre de kbps (kilobits par seconde) d'information utile qu'il est possible de passer par Watt de PIRE station consommée par liaison. L'indicateur de qualité QaF correspond à une PIRE normalisée en faisant le rapport en échelle linéaire du C/No (ratio signal sur densité de bruit total) requis par la liaison sur la PIREsol.
Le procédé comporte une étape dans laquelle on établit, en échelle logarithmique, une relation par liaison entre la PIREsol, le rapport signal sur densité de bruit total requis par la liaison et un indicateur de qualité QaF.

$$PIRE_{sol} = \left(\frac{C}{No}\right)_{req} - QaF \qquad [E4]$$

Les postes participant au bilan de liaison peuvent être de deux espèces :

- « p » termes de première espèce qui sont linéaires en PIREsol,

- « n-p » termes de seconde espèce qui ne sont pas linéaires en PIREsol.

En considérant ces deux types de postes, l'équation canonique [E2] devient :

$$\left(\frac{C}{No}\right)_{total}^{-1} = \sum_{i=1}^{p}\left(\frac{C}{No}\right)_{i}^{-1} + \sum_{j=p+1}^{n}\left(\frac{C}{No}\right)_{j}^{-1} \qquad [E5]$$

Pour obtenir l'indicateur de qualité QaF, le procédé va factoriser la PIREsol dans les postes de $1^{ère}$ espèce par opposition aux termes de $2^{nde}$ espèce, dans lesquels la PIREsol ne peut pas être factorisée. Le procédé considère l'ensemble des termes de $1^{ère}$ espèce comme un produit (en échelle linéaire) de la PIREsol et d'une mise en parallèle des contributions des différents postes de $1^{ère}$ espèce.

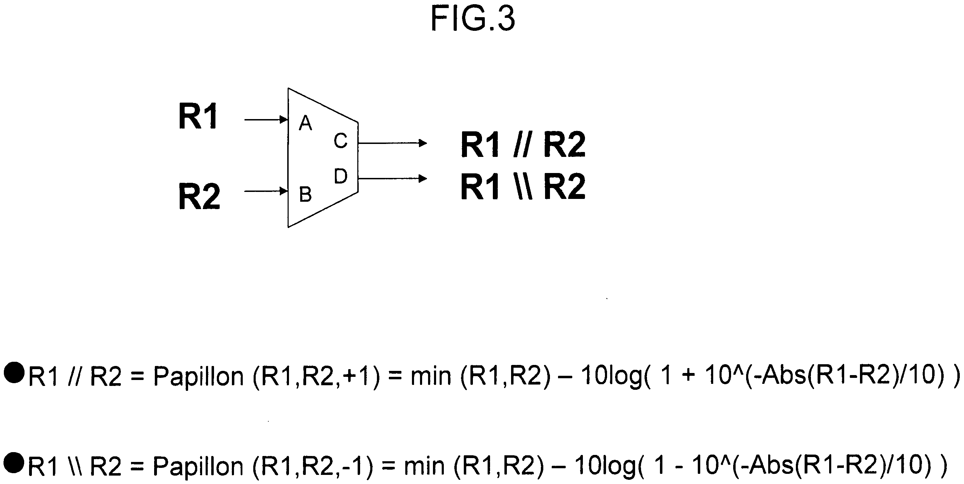

Pour déterminer les valeurs d'indicateur de qualité, on définit un opérateur « papillon » (par analogie avec l'opérateur élémentaire de transformée de fourier rapide FFT). La figure 3 représente un exemple de structure de cet opérateur.

Papillon($R_1$, $R_2$, signe) = min ($R_1$, $R_2$)-$10\log_{10}$(1+signe $10^{(-|(R1-R2)/10|)}$) [E6] Avec :

signe = $\pm$ 1 choisi selon l'espèce des postes perturbateurs.

$R_1$ et $R_2$ sont exprimés en dBHz/W et correspondent aux deux postes perturbateurs concernés par le regroupement, Ri est le facteur de qualité individuelle du poste i, un exemple détaillé est donné ci-après dans la description.

Sur les figures, les lettres A et B représentent les entrées de l'opérateur et les lettres D et C la sortie de l'opérateur papillon.

Les algorithmes mis en oeuvre dans l'outil de planification, dépendent des postes concernés.

Pour les postes linéaires

Les postes sont groupés 2 par 2 et le signe +1 est utilisé dans l'opérateur désigné « papillon »

$$R1 \mathbin{/\mkern-4mu/} R2 = \text{Papillon (R1, R2, +1)} \qquad [E7]$$

avec une répétition du motif récurrent « Papillon » jusqu'à épuisement des postes pour synthétiser l'ensemble des contributions des postes de $1^{ère}$ espèce, représenté Rt.

Pour les postes non linéaires regroupés en un seul terme $R_{NL}$

$$\text{PIREsol} = - \text{Rt} + \text{Papillon (} (C/No)req , R_{NL,} -1 ) \qquad [E8]$$

avec

$$\left( \sum_{j=p+1}^{n}\left(\frac{C}{No}\right)_{j}^{-1} \right)^{-1} = R_{NL}$$

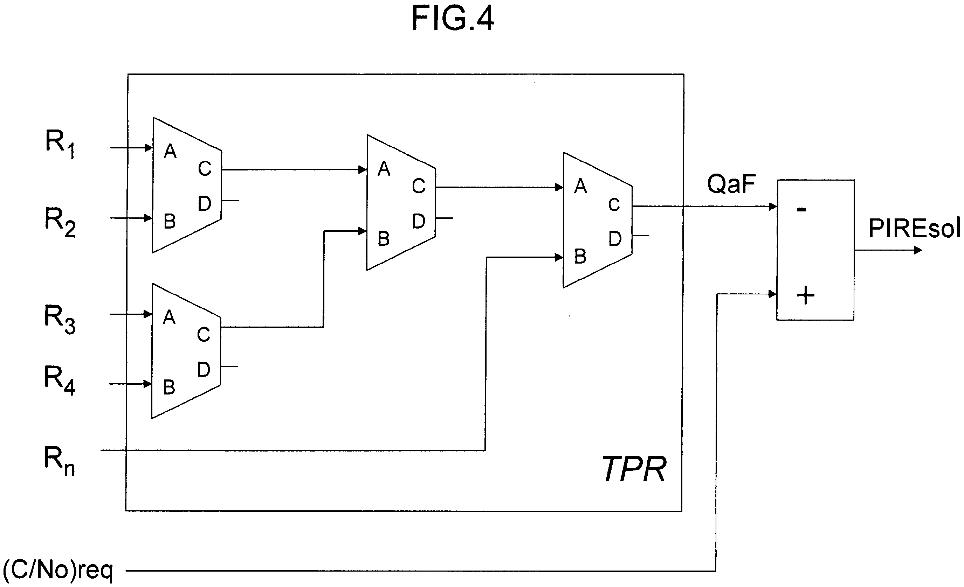

La figure 4 représente l'utilisation de l'opérateur papillon pour déterminer le bilan de liaison dans le cas où il n'y a que des postes de $1^{ère}$ espèce. Le procédé, connaissant la valeur $(C/N_O)_{req}$ détermine la valeur de PIREsol à l'aide de la relation [E4] et de la formule suivante obtenue en utilisant la relation [E7] :

5

$$QaF = R1 \,/\!/\, R2 \,/\!/\ldots\ldots/\!/\, Rn \qquad\qquad [E9]$$

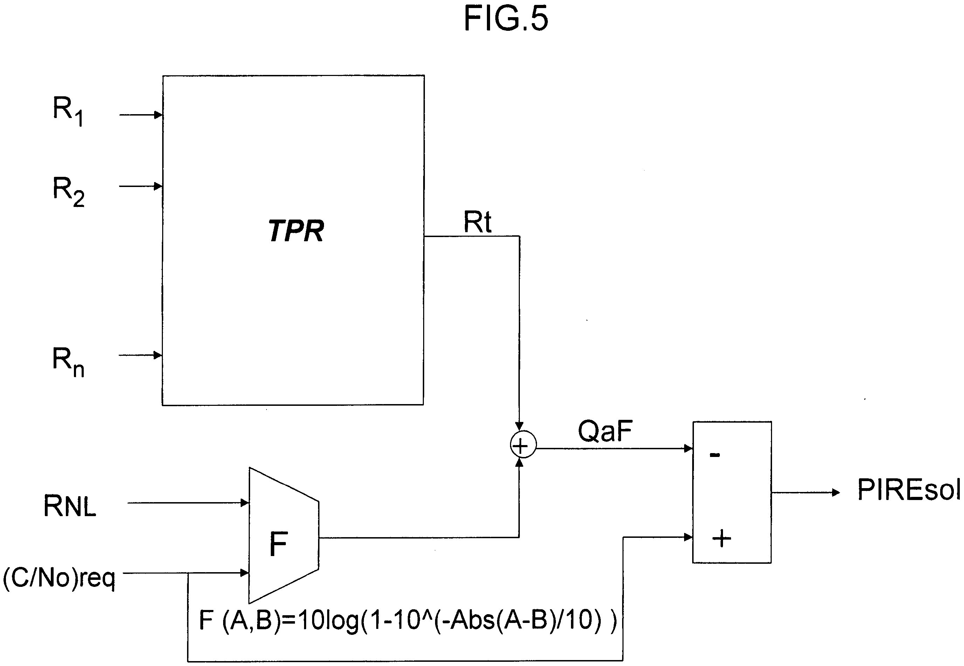

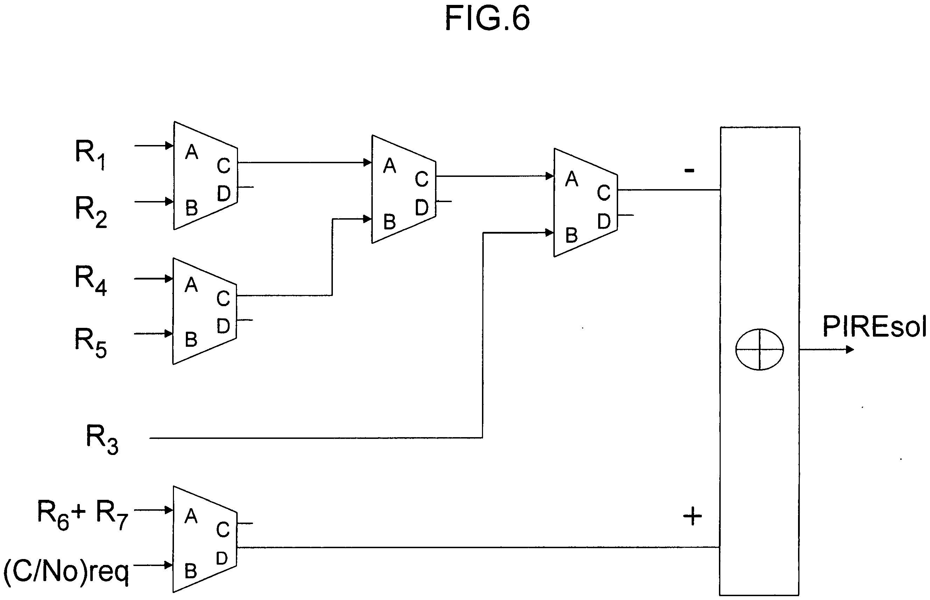

Les figures 5 et 6 représentent l'utilisation de l'opérateur pour déterminer le bilan de liaison dans le cas où, dans le système coexistent des postes de première espèce et des postes de seconde espèce. Le procédé peut déterminer la PIREsol de deux manières équivalentes :

- soit à l'aide de la relation [E4] et des deux relations suivantes (cf. figure 5) :

$$Rt = R1 \,/\!/\, R2 \,/\!/\ldots\ldots/\!/\, Rp \quad [E10] \text{ obtenue en utilisant } [E7]$$

$$QaF = Rt\,(\,1 - \rho/R_{NL}\,) \qquad [E11]$$

en échelle linéaire

$$\text{avec } \rho = \left(\frac{C}{No}\right)_{req}$$

- soit à l'aide des relations [E10] et [E8] explicitées plus loin dans la description(cf. figure 6).

Les figures 4, 5 et 6 permettent de visualiser un exemple de concaténation de l'opérateur élémentaire « Papillon ». Le résultat de cette concaténation est appelé sur la figure 5 « Transformée de Papillon Rapide » ou TPR. Cette transformée s'applique uniquement aux postes de 1$^{\text{ère}}$ espèce.

La figure 6 représente un exemple de calcul de PIREsol pour un ensemble comprenant 7 postes perturbateurs, avec 5 postes de 1$^{\text{ère}}$ espèce et 2 postes de seconde espèce. La valeur de PIREsol est obtenue en appliquant la relation [E8].

Des variantes de mise en oeuvre décrites ci-dessus, il ressort que :

- Plus grande est la QaF, plus faible est la PIRE nécessaire à débit utile D fixé (ou de manière équivalente, plus élevé est le débit D à PIRE fixée),
- On obtient une QaF nulle (i.e. même chiffre de PIRE que de C/No requis) pour un brouilleur de densité émission 0 dBW/Hz (exemple : 76 dBW étalé dans un répéteur de largeur de bande 40 MHz),
- On obtient une QaF négative (i.e. chiffre de PIRE > chiffre de C/No requis) pour un brouilleur plus fort étalé dans la même bande de répéteur.

Selon une variante de réalisation, l'indicateur de qualité est utilisé pour dimensionner les liaisons et notamment les antennes de réception.

Pour cela, le procédé déroule par exemple les étapes décrites ci-après :

On exprime l'indicateur de qualité QaF en fonction de la surface d'antenne de réception d'une station. Ceci conduit à une courbe qui peut être assimilée à un filtre de Butterworth passe-haut défini par une pente, un gain et une antenne de coupure à -3dB.

Le facteur de qualité individuelle du poste thermique descendant $R_2$ est exprimé sous la forme logarithmique suivante :

$$R_2 = R_1 + 20\,\log_{10}\!\left(\frac{\varnothing}{\varnothing_{-3}}\right) \qquad\qquad [E12]$$

avec :

$R_1$ le facteur de qualité individuelle du poste terme thermique montant = gain du filtre dans la bande passante.

Ø le diamètre de l'antenne de la station réception

Ø$_{-3}$ le paramètre appelé diamètre de l'antenne de coupure à -3 dB.

On en déduit la réponse « fréquencielle » du filtre $R_1//R_2$ précité en échelle linéaire :

$$QaF = R_1 \left( \frac{\varnothing^2}{\varnothing^2 + \varnothing^2_{-3}} \right) \qquad [E13]$$

Le calcul et l'allure du filtre sont généralisable à N termes de perturbation du bilan de liaison.

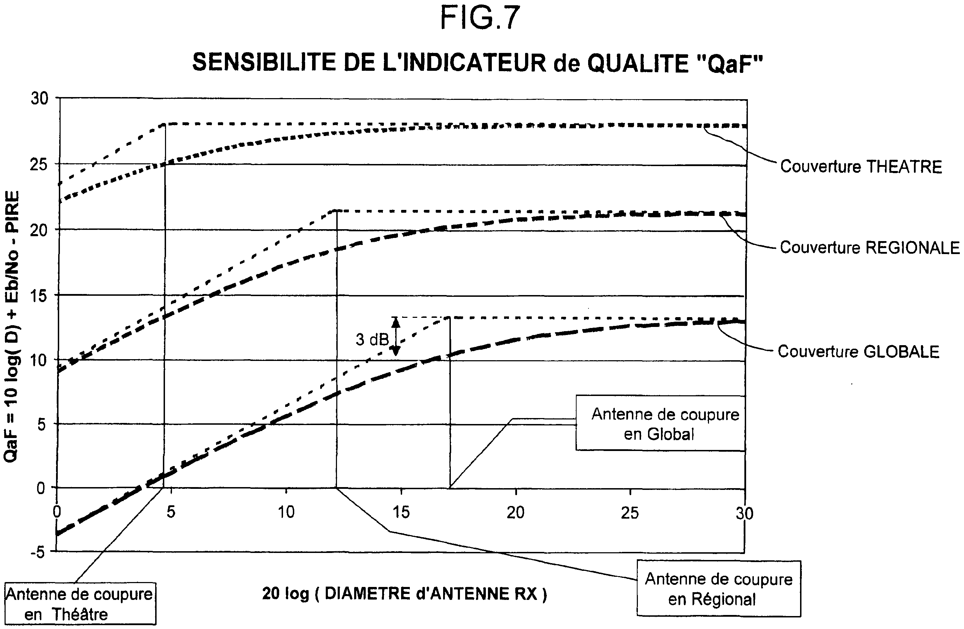

L'échelle log-log de la figure 7 permet d'identifier 2 zones :

- Une zone où le diamètre d'antenne est supérieur au diamètre d'antenne de coupure à -3 dB : le bruit thermique montant est dominant et c'est lui qui impose le bilan,
- Une zone où le diamètre d'antenne est inférieur au diamètre d'antenne de coupure à -3 dB : le bruit thermique descendant est dominant.

Si le diamètre d'antenne sol réception est égal au diamètre d'antenne de coupure à -3 dB , alors on a la relation linéaire QaF = 0,5 R1 et il y a équilibre entre la perturbation de bruit thermique montant et celle de bruit thermique descendant.

Chaque courbe de variation de QaF (en fonction du carré du diamètre de l'antenne réception) peut être paramétrée par :

- la couverture du canal satellite et/ou le gain opérationnel du répéteur,
- le niveau d'interférence ami et/ou ennemi,
- l'angle d'élévation des stations et/ou la température de bruit total,
- etc.

Ces courbes sont configurables et présentées sur requête de l'opérateur afin que celui-ci choisisse dans le domaine de valeur déterminé par l'outil de calcul selon l'invention, les combinaisons pertinentes de valeurs de paramètres de dimensionnement qui répondent au besoin opérationnel (ex : débits, TEB et niveau de brouilleur) et aux degrés de liberté du futur réseau à déployer (ex : couverture et parc d'antennes sol).

L'exemple d'application pratique qui suit est donné à titre illustratif et nullement limitatif pour mieux faire comprendre le déroulement des différentes étapes du procédé selon l'invention.

Le tableau 1 regroupe des grandeurs sur les bilans de liaison dans le domaine des télécommunications spatiales.

Toutes les grandeurs suivantes sont soit calculées par l'outil, soit renseignées par l'utilisateur, à l'exception de la constante de Boltzman.

Tableau 1

| Grandeur | Notation | unité | Segment spatial | Segment sol |
|---|---|---|---|---|
| Atténuation de la liaison montante | $A_{up}$ | dB | ● | ● |
| Atténuation de la liaison descendante | $A_{down}$ | dB | ● | ● |
| Avantage géographique de la station émission | $AvGeo_{up}$ | dB | ● | ● |
| Avantage géographique de la station réception | $AvGeo_{down}$ | dB | ● | ● |
| Constante de Boltzman | 10logK=-228,6 | dBW/Hz/K | | |
| Puissance reçue à saturation par l'antenne satellite en bord de zone | $C_{in\_saturationBZ}$ | dBW | ● | |
| Densité de flux saturant en bord de zone | $DFS_{BZ}$ | dBW/m$^2$ | ● | |
| PIRE d'une porteuse émise par le satellite | $PIRE_{sat}$ | dBW | ● | |
| Puissance reçue par l'antenne satellite | $C_{in}$ | dBW | ● | |

(suite)

| Grandeur | Notation | unité | Segment spatial | Segment sol |
|---|---|---|---|---|
| Gain opérationnel du répéteur | $G_{op}$ | dB | ● | |
| PIRE d'une porteuse émise par le satellite en bord de zone | $PIRE_{satBZ}$ | dBW | ● | |
| Facteur de mérite de l'antenne Rx de la station | $(G/T)_{sol}$ | dBi/K | | ● |
| Atténuation d'espace libre (e.l.) | $A_{el}$ | dB | ● | ● |
| Atténuation hors e.l. ou marge d'atténuation à la descente | $M_{down}$ | dB | ● | ● |
| Température du système en réception | $T_{sys}$ | K | | ● |
| Efficacité d'antenne réception | $\eta$ | adimensionnel | | ● |
| Diamètre d'antenne réception | Ø | mètre | | ● |
| Distance entre le satellite et une station | d | mètre | | ● |

Perturbation du bruit thermique montant :

$$P_1 = (C/No)_1 = PIRE_{sol} - A_{up} + (G/T)_{satBZ} + AvGeo_{up} - 10logK \qquad [E14]$$

On a donc la relation linéaire et homogène :

$$R_1 = Gain = \left(\frac{G}{T}\right)_{satBZ} \frac{AvGeo_{up}}{A_{up} \; K} \qquad [E15]$$

Caractéristiques du répéteur transparent :
Les caractéristiques données dans le cahier des charges du répéteur transparent sont usuellement les suivantes :

Tableau 2

| Grandeur | notation | Unité |
|---|---|---|
| Facteur de mérite de l'antenne Rx satellite en bord de zone | $(G/T)_{satBZ}$ | dBi/K |
| PIRE satellite à saturation en bord de zone | $PIRE_{SaturationBZ}$ | dBW |
| Recul en entrée (Input back-off) | IBO | dB |
| Recul en sortie (Output back-off) | OBO | dB |
| Densité de flux saturant minimale en bord de zone | $DFS_{BZmin}$ | dBW/m$^2$ |
| Longueur d'onde de la porteuse sur la liaison montante | $\lambda_{up}$ | m |
| Atténuation par rapport au gain maximum | $ATN_{sat}$ | dB |

Dans la zone linéaire ou quasi-linéaire du répéteur, le gain operationnel Gop (incluant ici les diagrammes d'antennes) est fourni par la relation suivante en échelle logarithmique :

$$(PIRE_{saturationBZ} - OBO) = (C_{in\_saturationBZ} - IBO) + G_{opBZ}$$

avec :

$$C_{in\_saturationBZ} = DFS_{BZ} - 10\log( 4\pi / \lambda_{up}^2 )$$

$$DFS_{BZ} = DFS_{BZmin} + ATNsat$$

on a aussi la relation en échelle logarithmique : $PIRE_{Sat} = C_{in} + G_{op}$ avec :

$$C_{in} = PIRE_{sol} - A_{up}$$

$$G_{op} = G_{opBZ} + AvGeo_{up} + AvGeo_{down}$$

d'où les deux relations suivantes en échelle logarithmique :

$$PIRE_{sat} = PIRE_{sol} - A_{up} + AvGeo_{up} + AvGeo_{down} + G_{opBZ} \qquad [E16]$$

$$G_{opBZ} = PIRE_{saturationBZ} - OBO + IBO - DFS_{BZmin} - ATN_{sat} + 10\log(4\pi/\lambda_{up}^2) \quad [E17]$$

Perturbation du bruit thermique descendant :

$$P_2 = (C/No)_2 = PIRE_{satBZ} - A_{down} + (G/T)_{sol} + AvGeo_{down} - 10\log K \quad [E18]$$

avec :

$$PIRE_{sat} = PIRE_{satBZ} + AvGeo_{down}$$

La combinaison de [E16] et [E18] donne :

$$P_2 = PIRE_{sol} - A_{up} - A_{down} + AvGeo_{up} + AvGeo_{down} + G_{opBZ} + (G/T)_{sol} - 10\log K \quad [E19]$$

Par ailleurs, $(G/T)_{sol}$ peut être calculé en séparant les deux termes :

- T = température du système $T_{sys}$ en réception (voir l'état de l'art)
- G = gain de l'antenne réception.

Si le $(G/T)_{sol}$ est calculé à l'entrée de l'amplificateur faible bruit LNA de la station, alors il faut retirer du gain d'antenne réception les pertes de ligne notées $L_{ligne}$ entre le pied d'antenne et le LNA.
On regroupe ensuite l'atténuation d'espace libre $A_{e.l.}$ sur le trajet descendant avec le gain d'antenne sol réception G pour faire disparaître la longueur d'onde de la porteuse à la descente.
On rappelle la formule de l'atténuation d'espace libre (en échelle linéaire) :

$$A_{e.l.} = \left( \frac{\lambda}{4\pi d} \right)^2 \qquad [E20]$$

Pour une antenne parabolique de diamètre Ø et d'efficacité η, le gain de réception dans l'axe vaut (en échelle linéaire) :

$$G = \eta \ \frac{4\pi S}{\lambda^2} \ = \ \eta \ (\frac{\pi \varnothing}{\lambda})^2 \qquad\qquad [E21]$$

On en déduit :

$$A_{e.I.} \ G \ = \eta \ ( \frac{\varnothing}{4\,d} )^2 \qquad\qquad [E22]$$

Cette relation est indépendante de la fréquence.

En combinant les relations [E19] et [E22], on trouve en échelle logarithmique la relation suivante :

$$P_2 = PIRE_{sol} - A_{up} - M_{down} + AvGeo_{up} + AvGeo_{down} + G_{opBZ} - 10 log T_{sys} -$$

$$10 log K + 10 log \eta \ -20 log \ d \ -12 \ dB + 20 log \ \varnothing \ - L_{ligne}$$

avec :

d = distance entre le satellite et la station réception.

On appelle "antenne de coupure à -3 dB" le diamètre d'antenne réception noté $\varnothing_{-3}$ qui correspond à l'équilibre $R_1 = R_2$.

En posant l'équation suivante sous forme logarithmique :

$$20 log \varnothing_{-3} = (G/T)_{satBZ} + M_{down} - AvGeo_{down} - G_{opBZ} + 10 log T_{sys} \ -10 log \eta$$

$$+20 log \ d \ +12 \ dB + L_{ligne} \qquad\qquad [E23]$$

on trouve :

$$R_2 = R_1 + 20 log \varnothing \ -20 log \varnothing_{-3} \qquad\qquad [E12]$$

(déjà citée) et on a la relation équivalente homogène sous forme linéaire :

$$( \varnothing_{-3} )^2 \ = \ \left( \frac{G}{T} \right)_{satBZ} \ \frac{16 \ d^2 \ T_{sys} \ M_{down} \ L_{ligne}}{G_{opBZ} \ \eta \ AvGeo_{down}} \qquad [E24]$$

$R_1 \ // \ R_2$ se simplifie à partir du radio $\varnothing/\varnothing_{-3}$ et de l'opérateur Papillon, en factorisant $R_1$.

En traçant en échelle log-log la courbe $R_1//R_2$ versus $20 log \varnothing$, on obtient un filtre passe-haut dans le domaine des surfaces d'antenne avec une antenne de coupure $\varnothing_{-3}$, un gain correspondant à la valeur asymptotique $R_1$, et une zone atténuée d'asymptote $R_2 = a + b \varnothing^2$, soit une pente de 10 dB par décade ou 3 dB par octave si l'axe des abscisses est gradué en $20 log(\varnothing)$.

De façon plus générale le procédé selon l'invention peut être utilisé dans tout dimensionnement de liaison. Le dimensionnement consiste notamment à trouver les bons compromis entre les grandeurs suivantes :

a) les gains opérationnels de répéteur (liés à la couverture donc aux antennes bord, et à un réglage d'atténuateur bord),

b) la taille d'antenne du parc de stations du segment sol,

c) la PIRE sol par liaison (en lien avec la taille d'antenne qui donne la PIRE station et le nombre de liaisons),

d) le débit utilisateur par liaison (en liaison avec la performance de Eb/No du modem sol),

e) le niveau d'interférence ami (respect des accords de coordination UIT ou des accords intergouvernementaux) ou ennemi (brouilleur).

Pour aider un opérateur du centre de gestion et de planification du réseau à trouver un bon dimensionnement, le procédé selon l'invention présente notamment comme avantage de présenter à l'opérateur :

i) un indicateur indépendant des points c) et d) ; c'est la QaF qui établit la relation d'échange PIREsol, D , Eb/No et Marge,
ii) La sensibilité de cet indicateur aux points a) b) et e) : c'est la famille de courbes de variation de QaF qui est doublement paramétrée par la couverture (Gain opérationnel de la charge utile) et le niveau de menace/interférence.

Sans sortir du cadre de l'invention, le procédé s'applique aussi dans un système utilisant un aéronef comme noeud de communication, soit en mode transparent (répéteur à bord), soit en mode non transparent (traitement à bord). L'aéronef est par exemple un drone ou un avion, hélicoptère ou tout autre dispositif ayant les mêmes fonctions. On utilise les relations [E1] à [E4] précédemment introduites, excepté pour la relation [E4] dans laquelle le terme extrême de droite tient compte de la séparation du bilan de liaison montante et descendante si le répéteur est non transparent. D'autres termes d'interférences s'ajouteront.

## Revendications

**1.** Procédé pour planifier et/ou dimensionner des liaisons entre plusieurs stations ou postes dans un système de télécommunications sans fil **caractérisé en ce qu'**il comporte au moins les étapes suivantes :

a) établir, par liaison existante et en échelle logarithmique, une relation entre la puissance rayonnée équivalente sol, PIREsol, le rapport signal sur densité de bruit requis (C/No)req pour une liaison, et un indicateur de qualité QaF,

$$\text{PIRE}_{sol} = \left(\frac{C}{N_0}\right)_{req} - \text{QaF}$$

où $C/N_0$ correspond au rapport signal sur bruit de densité total.

b) déterminer l'indicateur de qualité QaF à partir de la contribution des postes de perturbation de première espèce qui sont linéaires en PIREsol et des postes de seconde espèce qui sont non linéaires en PIREsol en utilisant :

$$\left(\frac{C}{No}\right)_{total}^{-1} = \sum_{i=1}^{p}\left(\frac{C}{No}\right)_{i}^{-1} + \sum_{j=p+1}^{n}\left(\frac{C}{No}\right)_{j}^{-1}$$

où p correspond aux termes de première espèce linéaires en PIREsol et « n-p » aux termes de seconde espèce qui ne sont pas linéaires en PIREsol, le coefficient de proportionalité entre le poste $C/N_0$ d'indice i et la PIREsol est noté R d'indice i avec l'équation en échelle linéaire suivante :

(C/N$_0$)i=Ri*PIREsol où i est l'indice des termes de première espèce,

c) déterminer la PIREsol en tenant compte de l'indicateur de qualité obtenu et du $C/N_0$ requis.

**2.** Procédé selon la revendication 1, **caractérisé en ce que**, pour déterminer l'indicateur de qualité QaF dans le cas de postes de première espèce, on regroupe les postes de première espèce 2 par 2 et on applique l'opérateur Papillon( $R_1$, $R_2$, signe) = min ($R_1$, $R_2$)-$10\log_{10}(1+\text{signe} .10^{(-|(R1-R2)/10|)})$, avec signe=+1, et on répète cet opérateur jusqu'à ce qu'il n'y ait plus de postes de première espèce.

**3.** Procédé selon la revendication 1, **caractérisé en ce que**, pour déterminer la PIREsol pour un réseau comprenant des postes de première espèce et des postes de seconde espèce, on utilise la relation établie à l'étape a) et des deux relations suivantes :

Rt = R1 // R2 //........// Rp[E10] obtenue en utilisant Papillon $(R_1, R_2, signe) = \min (R_1, R_2) - 10\log_{10}(1 + signe \cdot 10^{(-|R1-R2)/10|})$, avec signe=+1

$$QaF = Rt \left( 1 - \rho / R_{NL} \right) \text{ avec } \rho = \left( \frac{C}{N_0} \right)_{req}$$

**4.** Procédé selon la revendication 3, **caractérisé en ce que**, pour obtenir la PIREsol on utilise :

$$PIREsol = - Rt + Papillon( (C/No)req , R_{NL}, -1 )$$

Où Papillon $( R_1, R_2, signe) = \min (R_1, R_2) - 10\log_{10}(1 + signe \cdot 10^{(-|R1- R2)/10|})$, et

$$\left( \sum_{j=p+1}^{n} \left( \frac{C}{No} \right)_j^{-1} \right)^{-1} = R_{NL}$$

**5.** Procédé selon la revendication 1, **caractérisé en ce qu'**on exprime l'indicateur de qualité QaF en fonction de la surface d'antenne de réception d'une station comprenant une station Satcom émission-réception et on définit la zone où le bruit thermique montant est dominant et une zone où le bruit thermique descendant est dominant, une zone étant associée à un diamètre d'antenne.

**6.** Procédé selon l'une des revendications 1 à 4, **caractérisé en ce que** la liaison montante et la liaison descendante sont traitées séparément avec chacune un ou plusieurs postes de perturbation dans le bilan de sa liaison.

**7.** Centre de gestion centralisé (1) dit CGR **caractérisé en ce qu'**il comprend des moyens adaptés à mettre en oeuvre les étapes du procédé selon l'une des revendications 1 à 6.

**8.** Système de télécommunications sans fil **caractérisé en ce qu'**il comprend un centre de gestion centralisé selon la revendication 7 et plusieurs stations, chaque station comprenant un centre de gestion locale adapté à recevoir la liste des valeurs de puissance rayonnées équivalente sol, PIREsol, liaison par liaison.

**9.** Système selon la revendication 8 **caractérisé en ce que** le système est un système satellite régénératif avec traitement à bord du satellite.

**10.** Système selon la revendication 8 **caractérisé en ce qu'**il comprend un satellite répéteur transparent, les stations comprenant une antenne Satcom émission-réception.

**11.** Système selon la revendication 8 **caractérisé en ce qu'**il comprend un segment terrestre avec des stations communiquant entre elles et un segment aérien qui sert de relais de communications.

**Claims**

**1.** A method for planning and/or dimensioning links between a plurality of stations or terminals in a wireless telecommunications system, **characterised in that** it comprises at least the following steps of:

a) establishing, via an existing link and on a logarithmic scale, a relation betwwen the equivalent ground radiated power, PIREsol, the signal-to-noise ratio required (C/no)req for a link, and a quality indicator QaF,

$$PIRE_{sol} = \left(\frac{C}{N_0}\right)_{req} - QaF$$ where $C/N_0$ corresponds to the total signal-to-noise ratio,

b) determining the quality indicator QaF on the basis of the contribution of the first type linear interference terminals in PIREsol and the second type non-linear terminals in PIREsol by using:

$$\left(\frac{C}{No}\right)_{total}^{-1} = \sum_{i=1}^{p}\left(\frac{C}{No}\right)_i^{-1} + \sum_{j=p+1}^{n}\left(\frac{C}{No}\right)_j^{-1}$$

where p corresponds to the first type linea terms in PIREsol and "n-p" corresponds to the second type non-linear terms in PIREsol, the proportionality coefficient between the terminal $C/N_0$ of index i and the PIREsol is designated R for index i with the equation on the following linear scale:
$(C/N_0)i = Ri*PIREsol$ where i is the index of the first type terms,
c) determinig the PIREsol by taking into account the quality indicator obtained and the $C/N_0$ required.

2. The method according to claim 1, **characterised in that** in order to determine the quality indicator QaF in the case of first type terminals, said first type terminals are grouped in pairs and the Papillon operator $(R_1, R_2, signe) = min (R_1, R_2)-10log_{10}(1+signe \cdot 10^{(-|(R1- R2)/10|)})$, is applied, with sign =+1 and this operator is repeated until there are no longer any first type terminals.

3. The method according to claim 1, **characterised in that** in order to determine the PIREsol for a network that comprises first type terminals and second type terminals, the relation established in step a) and the following two relations are used:
Rt = R1 // R2 //........// Rp[E10] obtained using Papillon $(R_1, R_2, signe) = min (R_1, R_2)-10log_{10}(1+sign 10^{(-|(R1- R2)/10|)})$, with sign =+1

$$QaF = Rt(1 - \rho / R_{NL})$$ with $\rho = \left(\frac{C}{N_0}\right)_{req}$.

4. The method according to claim 3, **characterised in that** the following is used in order to obatin PIREsol:

$$PIREsol = -Rt + Papillon((C/No)req, R_{NL}, -1)$$

where Papillon $(R_1, R_2, signe) = min (R_1, R_2)-10log_{10}(1+sign 10^{(-|(R1- R2)/10|)})$ and

$$\left(\sum_{j=p+1}^{n}\left(\frac{C}{No}\right)_j^{-1}\right)^{-1} = R_{NL}$$

5. The method according to claim 3, **characterised in that** the quality indicator QaF is expressed as a function of the surface of the receiving antenna of a station that comprises a Satcom emitting-receiving station, and the area in which uplink thermal noise is dominant and an area in which dowlink thermal noise is dominant are defined, an area being associated with an antenna diameter.

6. The method according to any one of claims 1 to 4, **characterised in that** the uplink and the dowlink are processed separately for each of the one or more interfering terminals in the analysis of its link.

7. A centralised management centre (CGR) (1), **characterised in that** it comprises means that are designated to implement the steps of the method according to any one of claims 1 to 6.

8. A wireless telecommunication system, **characterised in that** it comprises a centralised management centre according to claims 7 and a plurality of stations, each station comprising a local management centre that is designated to receive the list of the values of equivalent ground radiated power, PIREsol, link by link.

9. The system according to claim 8, **characterised in that** the system is a regenerating satellite system with on-board processing of the satellite.

10. The system according to claim 8, **characterised in that** it comprises a transparent repeater satellit, the stations comprising a Stacom emitting-receiving antenna.

11. The system according to claim 8, **characterised in that** it comprises a terrestrail segment with stations that communicate with each other and air segment that acts as a communications relay.

**Patentansprüche**

1. Verfahren zum Planen und/oder Dimensionieren von Verbindungen zwischen mehreren Stationen oder Endgeräten in einem drahtlosen Kommunikationssystem, **dadurch gekennzeichnet, dass** es wenigstens die folgenden Schritte beinhaltet:

   a) Aufbauen, über eine existierende Verbindung und auf einem logarithmischen Maßtab, einer Beziehung zwischen der äquivalenten isotropischen Abstrahlleistung (EIRP), PIREsol, des für eine Link benötigten $(C/No)_{req}$

   Signal-Rauschdichte-Verhältnisses und eines Qualitätsindikators QaF; $PIRE_{sol} = \left(\dfrac{C}{N_0}\right)_{req} - QaF$ wobei

   $C/N_0$ dem Signal-Rauschdichte-Gesamtverhältnis entspricht,
   b) Ermitteln des Qualitätsindikators QaF auf der Basis des Beitrags der Störendgeräte des ersten Typs, die in PIREsol linear sind, und der Endgeräte des zweiten Typs, die in PIREsol nicht linear sind, unter Verwendung von:

   $$\left(\frac{C}{No}\right)_{total}^{-1} = \sum_{i=1}^{p}\left(\frac{C}{No}\right)_i^{-1} + \sum_{j=p+1}^{n}\left(\frac{C}{No}\right)_j^{-1}$$

   wobei p den in PIREsol linearen Termen des ersten Typs entspricht und "n-p" den in PIREsol nichtlinearen Termen des zweiten Typs entspricht, wobei der Proportionalitätskoeffizient zwischen dem Endgerät $C/N_0$ mit Index i und PIREsol in der folgenden linearen Gleichung mit R mit Index i bezeichnet wird:
   $(C/N_0)i=Ri*PIREsol$, wobei i der Index der Terme des ersten Typs ist,
   c) Ermitteln der PIREsol unter Berücksichtigung des erhaltenen Qualitätsindikators und des benötigten $C/N_0$.

2. Verfahren nach Anspruch 1, **dadurch gekennzeichnet, dass** zum Ermitteln des Qualitätsindikators QaF im Falle von Endgeräten des ersten Typs die Endgeräte des ersten Typs paarweise gruppiert und der Papillon-Operator $(R_1, R_2, \text{Vorzeichen}) = \min(R_1, R_2) - 10\log_{10}(1+\text{Vorzeichen } 10^{(-|(R1- R2)/10|)})$ angewendet wird, wobei Vorzeichen $=+1$, und dieser Operator wird wiederholt, bis es keine Endgeräte des ersten Typs mehr gibt.

3. Verfahren nach Anspruch 1, **dadurch gekennzeichnet, dass** zum Ermitteln des PIREsol für ein Netzwerk, das Endgeräte des ersten Typs und Endgeräte des zweiten Typs umfasst, die in Schritt a) hergestellte Beziehung und die folgenden beiden Bezichungen verwendet werden:
   Rt = R1 // R2 //........// Rp [E10] erhalten unter Verwendung von Papillon $(R_1, R_2, \text{Vorzeichen}) = \min(R_1, R_2) - 10\log_{10}(1+\text{Vorzeichen } 10^{(-|(R1- R2)/10|)})$, mit Vorzeichen $=+1$

$$QaF = Rt(1 - \rho / R_{NL}) \quad \text{mit} \quad \rho = \left(\frac{C}{N_0}\right)_{req}.$$

**4.** Verfahren nach Anspruch 3, **dadurch gekennzeichnet, dass** zum Erhalten von PIREsol Folgendes angewendet wird:

$$PIREsol = - Rt + Papillon( (C/No)req , R_{NL} -1 )$$

wobei Papillon $(R_1, R_2,$ Vorzeichen$) = \min (R_1, R_2) - 10\log_{10}(1 + \text{Vorzeichen } 10^{(-|(R1- R2)/10|)})$ und

$$\left(\sum_{j=p+1}^{n} \left(\frac{C}{No}\right)_j^{-1}\right)^{-1} = R_{NL}$$
.

**5.** Verfahren nach Anspruch 1, **dadurch gekennzeichnet, dass** der Qualitätsindikator QaF als ein Funktion der Oberfläche der Empfangsantenne einer Station ausgedrückt wird, die eine Satcom-Sende/Empfangsstation umfasst, und die Zone, in der das Uplink-Wärmerauschen dominant ist, und eine Zone, in der das Downlink-Wärmerauschen dominant, ist, definiert werden, wobei eine Zone mit einem Antennendurchmesser assoziiert ist.

**6.** Verfahren nach einem der Ansprüche 1 bis 4, **dadurch gekennzeichnet, dass** die Uplink und die Downlink separat für jedes der ein oder mehreren Störendgeräte in der Analyse ihrer Link verarbeitet werden.

**7.** Zentralisierte Managementzentrale (CGR) (1), **dadurch gekennzeichnet, dass** sie Mittel umfasst, die zum Ausführen der Schritte des Verfahrens nach einem der Ansprüche 1 bis 6 ausgelegt sind.

**8.** Drahtloses Telekommunikationssystem, **dadurch gekennzeichnet, dass** es eine zentralisierte Managementzentrale nach Anspruch 7 sowie mehrere Stationen umfasst, wobei jede Station eine lokale Managementzentrale umfasst, die zum Empfangen der Liste der Werte von äquivalenten isotropischen Abstrahlleistungen PIREsol Link für Link ausgelegt ist.

**9.** System nach Anspruch 8, **dadurch gekennzeichnet, dass** das System ein regeneratives Satellitensystem mit Bordverarbeitung des Satelliten ist.

**10.** System nach Anspruch 8, **dadurch gekennzeichnet, dass** es einen transparenten Repeater-Satelliten umfasst, wobei die Stationen eine Satcom-Sende/Empfangs-Antenne umfassen.

**11.** System nach Anspruch 8, **dadurch gekennzeichnet, dass** es ein terrestrisches Segment mit Stationen umfasst, die miteinander kommunizieren, und ein Luftsegment, das als Kommunikationsrelais dient.

FIG.1

7 IM bord

SKYNET 5

$(G/T)_{sat}$

$PIRE_{sat}$

Trafic et
Thermique
descendant
2

Interférant
descendant

Trafic et
1 Thermique
montant

Interférant
montant

$PIRE_{sol}$

$(G/T)_{sol}$

$(C/No)_T$

PIRE
brouilleur

6

3

4

EP 1 815 632 B1

# FIG.2

*Planification*
*Logiciel de bilan de Liaison*
*Implémentant l'invention*

PIREsol

| Centre de Gestion Centralisée du Réseau |

| Equipement de Gestion Locale du Modem | → | Modem | →

| Equipement de Gestion Locale du Modem | → | Modem | →

| Equipement de Gestion Locale du Modem | → | Modem | →

EP 1 815 632 B1

# FIG.3

● R1 // R2 = Papillon (R1,R2,+1) = min (R1,R2) − 10log( 1 + 10^(-Abs(R1-R2)/10) )

● R1 \\ R2 = Papillon (R1,R2,-1) = min (R1,R2) − 10log( 1 - 10^(-Abs(R1-R2)/10) )

EP 1 815 632 B1

# FIG.4

EP 1 815 632 B1

## FIG.5

$F(A,B) = 10\log(1 - 10^{\wedge}(-\text{Abs}(A-B)/10))$

EP 1 815 632 B1

# FIG.6

EP 1 815 632 B1

## FIG.7

### SENSIBILITE DE L'INDICATEUR de QUALITE "QaF"

- Couverture THEATRE
- Couverture REGIONALE
- Couverture GLOBALE

3 dB

Antenne de coupure en Global

Antenne de coupure en Régional

Antenne de coupure en Théâtre

20 log ( DIAMETRE d'ANTENNE RX )

QaF = 10 log( D ) + Eb/No - PIRE

EP 1 815 632 B1